# EUROPEAN PATENT APPLICATION

(11) **EP 4 668 998 A1**
(43) Date of publication of application: **24.12.2025**
(21) Application number: 23926012.8
(22) Date of filing: 03.11.2023
(51) Int. Cl.: H04W 72/541, H04L 69/14, H04W 4/44, G07B 15/06, H04W 72/0453

(54) **DATA PROCESSING METHOD AND DEVICE**

(30) Priority: 09.03.2023 CN 202310254008
(71) Applicant: Huawei Technologies Co., Ltd., Shenzhen, Guangdong 518129 (CN)
(72) Inventor: SUN, Defu, Shenzhen, Guangdong 518129 (CN)
(74) Representative: Pfenning, Meinig & Partner mbB
(86) International application number: PCT/CN2023/129760
(87) International publication number: WO 2024/183316

(57) **Abstract**

This application discloses a data processing method and apparatus. The method includes: sending a signal of a service at a first operating frequency, where the first operating frequency is adjacent to or overlaps with a first frequency of an electronic toll collection ETC system; detecting a first signal at a second frequency of the ETC system, where the first signal is a wake-up signal of the ETC system for an on-board unit OBU; and in response to a detection result of the first signal, suspending sending the signal of the service at the first operating frequency. In the method, a characteristic signal of a wireless communication system, for example, an ETC system, can be identified in a timely manner, to actively perform interference avoidance, thereby ensuring normal running of the wireless communication system.

## Description

This application claims priority to Chinese Patent Application No. 202310254008.X, filed with the China National Intellectual Property Administration on March 9, 2023 and entitled "DATA PROCESSING METHOD AND APPARATUS", which is incorporated herein by reference in its entirety.

### TECHNICAL FIELD

This application relates to the field of intelligent transportation, and in particular, to a data processing method and apparatus.

### BACKGROUND

In wireless communication, because a radio channel or a frequency band is shared, a wireless communication system, for example, an electronic toll collection (electronic toll collection, ETC) system, may be interfered with by another wireless communication system in a process of providing a corresponding service. As a result, normal running of the system is affected.

### SUMMARY

This application discloses a data processing method and apparatus, to identify a characteristic signal of a wireless communication system, for example, an ETC system, in a timely manner, and actively perform interference avoidance, thereby ensuring normal running of the wireless communication system.

According to a first aspect, this application provides a data processing method. The method includes: sending a signal of a service at a first operating frequency, where the first operating frequency is adjacent to or overlaps with a first frequency of an electronic toll collection ETC system; detecting a first signal at a second frequency of the ETC system, where the first signal is a wake-up signal of the ETC system for an on-board unit OBU; and in response to a detection result of the first signal, suspending sending the signal of the service at the first operating frequency.

For example, that the first operating frequency is adjacent to the first frequency may be understood as follows: Both the first operating frequency and the first frequency are in a same preset frequency range; or understood as that an interval between the first operating frequency and the first frequency is less than a first threshold.

Herein, a relationship between the first operating frequency and the second frequency is not limited. For example, the first operating frequency may be adjacent to or may overlap with the second frequency, or the first operating frequency may neither be adjacent to nor overlap with the second frequency.

In the foregoing method, an ETC signal, for example, the wake-up signal of the ETC system for the on-board unit, is detected at an operating frequency of the ETC system, so that the ETC system can be discovered in a timely manner, and then sending the signal of the service at a frequency that is adjacent to or overlaps with the operating frequency of the ETC system is stopped. In this way, interference avoidance is implemented for the operating frequency of the ETC system, to help ensure normal running of the ETC system.

Optionally, the first frequency is an uplink frequency, and the second frequency is a downlink frequency. Herein, the first frequency is different from the second frequency, but both the first frequency and the second frequency are operating frequencies that need to be used for the running of the ETC system.

In the foregoing implementation, the wake-up signal of the ETC system for the on-board unit is detected at a downlink frequency of the ETC system, so that the ETC system can be discovered in a timely manner, and then sending the signal of the service at a frequency that is adjacent to or overlaps with an uplink frequency of the ETC system is stopped. In this way, interference avoidance is implemented for the uplink frequency of the ETC system, to help ensure normal running of the ETC system.

Further, when the first signal is detected at a downlink frequency of the ETC system, interference avoidance may be further performed for each downlink frequency of the ETC system. For example, sending a signal of another service at a frequency that is adjacent to or overlaps with the downlink frequency of the ETC system is stopped, to avoid interference to the running of the ETC system.

Optionally, the first frequency is a downlink frequency, and the second frequency is a downlink frequency.

In an implementation, the first frequency is the second frequency. In this case, it indicates that, for the signal of the service sent at the first operating frequency, the first operating frequency is adjacent to or overlaps with a downlink frequency (for example, a downlink frequency 1) of the ETC system. If the first signal is detected at the downlink frequency 1, sending the signal of the service at the first operating frequency may be suspended. In this way, interference avoidance is implemented for the downlink frequency 1, and normal running of the ETC system is not affected.

Further, in addition to interference avoidance for the downlink frequency 1, interference avoidance may be performed for another downlink frequency of the ETC system and/or an uplink frequency of the ETC system. For example, sending a signal of another service at a frequency that is adjacent to or overlaps with another downlink frequency of the ETC system is suspended, and/or sending a signal of another service at a frequency that is adjacent to or overlaps with an uplink frequency of the ETC system is suspended. Alternatively, in a period in which the first signal is detected at the downlink frequency 1, a frequency that is adjacent to or overlaps with a downlink frequency of the ETC system is not used, and a frequency that is adjacent to or overlaps with an uplink frequency of the ETC system is not used.

In another implementation, the first frequency is different from the second frequency. In this case, it indicates that the ETC system has at least two downlink frequencies. For the signal of the service sent at the first operating frequency, the first operating frequency is adjacent to or overlaps with a downlink frequency (for example, a downlink frequency 1) of the ETC system. When the first signal is detected at another downlink frequency (for example, a downlink frequency 2) of the ETC system, sending the signal of the service at the first operating frequency may be suspended. In this way, interference avoidance is implemented for the downlink frequency 1.

Further, in addition to the downlink frequency 1, interference avoidance may be performed for another downlink frequency of the ETC system, and/or interference avoidance may be performed for all uplink frequencies of the ETC system. In this way, normal running of the ETC system is not affected. For example, sending a signal of another service at a frequency that is adjacent to or overlaps with another downlink frequency of the ETC system is suspended, and/or sending a signal of another service at a frequency that is adjacent to or overlaps with an uplink frequency of the ETC system is suspended. Alternatively, in a period in which the first signal is detected at the downlink frequency 2, a frequency that is adjacent to or overlaps with a downlink frequency of the ETC system is not used, and a frequency that is adjacent to or overlaps with an uplink frequency of the ETC system is not used.

Optionally, after suspending sending the signal of the service at the first operating frequency, the method further includes: canceling the suspension if the first signal is not detected at the second frequency within preset duration.

In the foregoing implementation, if the first signal is not detected at the second frequency within the preset duration, the signal of the service may continue to be sent at the first operating frequency. In this way, utilization or usage of the first operating frequency is improved.

Optionally, the method further includes: sending the signal of the service at a second operating frequency, where the second operating frequency is neither adjacent to nor overlaps with the first frequency.

In the foregoing implementation, the signal of the service is sent at the second operating frequency that is neither adjacent to nor overlaps with an uplink frequency of the ETC system, instead of at the first operating frequency. This does not interfere with subsequent use of the uplink frequency by the ETC system, and does not delay sending of the signal of the service, thereby facilitating normal running of the ETC system and helping improve communication efficiency.

Optionally, the method further includes: receiving auxiliary information; and performing detection of the first signal based on the auxiliary information.

For example, the auxiliary information may be received and obtained from a second device, or may be obtained from an application service of a first device. The application service includes but is not limited to, for example, a navigation application and an image detection application. The second device includes but is not limited to at least one of a user terminal, a network-side device, a roadside device, a vehicle, or the like.

For example, the auxiliary information is navigation indication information. The navigation indication information indicates that a current location is within an area range of a service station of the ETC system, or indicates that a navigation path passes through a service station of the ETC system, or indicates a distance to a current nearest service station of the ETC system.

For example, the auxiliary information is auxiliary detection information. The auxiliary detection information indicates that a service station of the ETC system has been identified or detected, or indicates that an area range of a service station of the ETC system is about to be entered or has been entered, or indicates that the ETC system appears.

In the foregoing implementation, a trigger condition is specified for the detection of the first signal, so that a device that executes the method does not need to be in a detection state in real time, and starts the detection of the first signal only after receiving the auxiliary information. In this way, consumption of a resource, for example, consumption of electric energy or consumption of bandwidth, on the device can be reduced.

Optionally, detecting the first signal includes: after it is detected that a power value of the first signal in frequency domain or time domain is greater than a preset threshold, identifying that the first signal meets a signal feature of a square-wave wake-up signal of the ETC system.

In the foregoing implementation, identification of the first signal is enabled only after it is detected that the power value of the first signal in frequency domain or time domain is greater than the preset threshold, thereby helping to improve signal processing efficiency.

According to a second aspect, this application provides a data processing method. The method includes: sending a signal of a service at a first operating frequency, where the first operating frequency is adjacent to or overlaps with a first frequency of a first application system; detecting a first signal at a second frequency of the first application system, where the first signal is a wake-up signal of the first application system for an application device; and in response to a detection result of the first signal, suspending sending the signal of the service at the first operating frequency.

Optionally, the first frequency is different from the second frequency.

For example, that the first operating frequency is adjacent to the first frequency may be understood as follows: Both the first operating frequency and the first frequency are in a same preset frequency range; or understood as that an interval between the first operating frequency and the first frequency is less than a first threshold.

In the foregoing method, when the wake-up signal of the first application system for the application device is detected at the second frequency of the first application system, sending the signal of the service at a frequency that is adjacent to or overlaps with the first frequency of the first application system is stopped in a timely manner. In this way, interference avoidance is implemented for the first frequency, to facilitate normal running of the first application system.

Optionally, the first frequency is an uplink frequency or a downlink frequency, and the second frequency is an uplink frequency or a downlink frequency.

For example, the first application system includes an application service providing device and an application service using device. The application service providing device sends a signal to the application service using device based on a downlink frequency. The application service using device sends a feedback signal to the application service providing device based on an uplink frequency.

In other words, the following four combination manners of the first frequency and the second frequency are included:
(1) the first frequency is an uplink frequency, and the second frequency is an uplink frequency;
(2) the first frequency is an uplink frequency, and the second frequency is a downlink frequency;
(3) the first frequency is a downlink frequency, and the second frequency is a downlink frequency; and
(4) The first frequency is a downlink frequency, and the second frequency is an uplink frequency.

For the manner 1, a characteristic signal of the first application system is detected in advance at an uplink frequency of the first application system, so that interference avoidance processing can be performed for another uplink frequency of the first application system in a timely manner. Further, interference avoidance may be further performed for a downlink frequency of the first application system, for example, sending a signal of another service at a frequency that is adjacent to or overlaps with the downlink frequency of the first application system is suspended.

For the manner 2, a characteristic signal of the first application system is detected in advance at a downlink frequency of the first application system, so that interference avoidance processing can be performed for an uplink frequency of the first application system in a timely manner. Further, interference avoidance may be further performed for each downlink frequency of the first application system, for example, sending a signal of another service at a frequency that is adjacent to or overlaps with a downlink frequency of the first application system is suspended.

For the manner 3, a characteristic signal of the first application system is detected in advance at a downlink frequency of the first application system, so that interference avoidance processing can be performed for another downlink frequency of the first application system in a timely manner. Further, interference avoidance may be further performed for an uplink frequency of the first application system, for example, sending a signal of another service at a frequency that is adjacent to or overlaps with the uplink frequency of the first application system is suspended.

For the manner 4, a characteristic signal of the first application system is detected in advance at an uplink frequency of the first application system, so that interference avoidance processing can be performed for a downlink frequency of the first application system in a timely manner. Further, interference avoidance may be further performed for each uplink frequency of the first application system, for example, sending a signal of another service at a frequency that is adjacent to or overlaps with another uplink frequency of the first application system is suspended.

Optionally, after suspending sending the signal of the service at the first operating frequency, the method further includes: canceling the suspension if the first signal is not detected at the second frequency within preset duration.

In the foregoing implementation, if the first signal is not detected at the second frequency within the preset duration, the signal of the service may continue to be sent at the first operating frequency. In this way, utilization or usage of the first operating frequency is improved.

Optionally, the method further includes: sending the signal of the service at a second operating frequency, where the second operating frequency is neither adjacent to nor overlaps with the first frequency.

In the foregoing implementation, the signal of the service is sent at the second operating frequency that is neither adjacent to nor overlaps with the first frequency, instead of at the second operating frequency. This does not interfere with subsequent use of the first frequency by the first application system, and does not delay sending of the signal of the service, thereby facilitating normal running of the first application system and helping improve communication efficiency.

Optionally, the method further includes: receiving auxiliary information; and performing detection of the first signal based on the auxiliary information.

For example, the auxiliary information may be navigation indication information. The navigation indication information indicates that a current location is within an area range of a service station of the first application system, or indicates that a navigation path passes through a service station of the first application system, or indicates a distance to a current nearest service station of the first application system.

For example, the auxiliary information is auxiliary detection information. The auxiliary detection information indicates that a service station of the first application system has been identified or detected, or indicates an area range of a service station of the first application system is about to be entered or has been entered, or indicates that the first application system appears.

For example, a sending end of the auxiliary information includes but is not limited to at least one of a user terminal, a network-side device, a roadside device, a vehicle, or the like.

In the foregoing implementation, a trigger condition is specified for the detection of the first signal, so that a device that executes the method does not need to be in a detection state in real time, and starts the detection of the first signal only after receiving the auxiliary information. In this way, consumption of a resource, for example, consumption of electric energy or consumption of bandwidth, on the device can be reduced.

Optionally, the first application system is an electronic toll collection ETC system, and the application device is an on-board unit OBU.

Further, detecting the first signal includes: after it is detected that a power value of the first signal in frequency domain or time domain is greater than a preset threshold, identifying that the first signal meets a signal feature of a square-wave wake-up signal of the ETC system.

In the foregoing implementation, when a wake-up signal of the ETC system for the OBU is detected at the second frequency, sending the signal of the service at a frequency that is adjacent to or overlaps with an operating frequency of the ETC system is stopped. In this way, interference avoidance is implemented for the operating frequency of the ETC system, to help ensure normal running of the ETC system.

According to a third aspect, this application provides a data processing apparatus. The apparatus includes: a sending unit, configured to send a signal of a service at a first operating frequency, where the first operating frequency is adjacent to or overlaps with a first frequency of an electronic toll collection ETC system; and a processing unit, configured to detect a first signal at a second frequency of the ETC system, where the first signal is a wake-up signal of the ETC system for an on-board unit OBU. The processing unit is further configured to suspend, in response to a detection result of the first signal, sending the signal of the service at the first operating frequency.

Optionally, the first frequency is an uplink frequency, and the second frequency is a downlink frequency.

Optionally, the first frequency is a downlink frequency, and the second frequency is a downlink frequency.

Optionally, the processing unit is further configured to: cancel the suspension if the first signal is not detected at the second frequency within preset duration.

Optionally, the sending unit is further configured to: send the signal of the service at a second operating frequency, where the second operating frequency is neither adjacent to nor overlaps with the first frequency.

Optionally, the apparatus further includes a receiving unit. The receiving unit is configured to receive auxiliary information. The processing unit is further configured to perform detection of the first signal based on the auxiliary information.

Optionally, the processing unit is specifically configured to: after it is detected that a power value of the first signal in frequency domain or time domain is greater than a preset threshold, identify that the first signal meets a signal feature of a square-wave wake-up signal of the ETC system.

According to a fourth aspect, this application provides a data processing apparatus. The apparatus includes: a sending unit, configured to send a signal of a service at a first operating frequency, where the first operating frequency is adjacent to or overlaps with a first frequency of a first application system; and a processing unit, configured to detect a first signal at a second frequency of the first application system, where the first signal is a wake-up signal of the first application system for an application device. The processing unit is further configured to suspend, in response to a detection result of the first signal, sending the signal of the service at the first operating frequency.

Optionally, the first frequency is different from the second frequency.

Optionally, the first frequency is an uplink frequency or a downlink frequency, and the second frequency is an uplink frequency or a downlink frequency.

In other words, the following four combination manners of the first frequency and the second frequency are included:
(1) the first frequency is an uplink frequency, and the second frequency is an uplink frequency;
(2) the first frequency is an uplink frequency, and the second frequency is a downlink frequency;
(3) the first frequency is a downlink frequency, and the second frequency is a downlink frequency; and
(4) The first frequency is a downlink frequency, and the second frequency is an uplink frequency.

Optionally, the processing unit is further configured to: cancel the suspension if the first signal is not detected at the second frequency within preset duration.

Optionally, the sending unit is further configured to: send the signal of the service at a second operating frequency, where the second operating frequency is neither adjacent to nor overlaps with the first frequency.

Optionally, the apparatus further includes a receiving unit. The receiving unit is configured to receive auxiliary information. The processing unit is further configured to perform detection of the first signal based on the auxiliary information.

Optionally, the first application system is an electronic toll collection ETC system, and the application device is an on-board unit OBU.

Further, the processing unit is specifically configured to: after it is detected that a power value of the first signal in frequency domain or time domain is greater than a preset threshold, identify that the first signal meets a signal feature of a square-wave wake-up signal of the ETC system.

According to a fifth aspect, this application provides a data detection apparatus. The apparatus includes a processor and a memory, and the memory is configured to store program instructions. The processor invokes the program instructions in the memory, so that the apparatus performs the method according to any one of the first aspect or the possible implementations of the first aspect, or performs the method according to the second aspect or any one of the possible implementations of the second aspect.

According to a sixth aspect, this application provides a vehicle. The vehicle includes the apparatus according to any one of the third aspect or the possible implementations of the third aspect, or includes the apparatus according to any one of the fourth aspect or the possible implementations of the fourth aspect, or includes the apparatus according to the fifth aspect.

According to a seventh aspect, this application provides a terminal. The terminal includes the apparatus according to any one of the third aspect or the possible implementations of the third aspect, or includes the apparatus according to any one of the fourth aspect or the possible implementations of the fourth aspect, or includes the apparatus according to the fifth aspect.

Examples of the terminal include but are not limited to: smart home devices (such as a television, a robotic vacuum cleaner, a smart desk lamp, a sound system, a smart lighting system, an electrical control system, home background music, a home theater system, an intercom system, and video surveillance), smart transportation devices (such as a vehicle, a ship, an uncrewed aerial machine, a train, a lorry, and a truck), smart manufacturing devices (such as a robot, an industrial device, smart logistics, and a smart factory), and smart terminals (such as a mobile phone, a computer, a tablet computer, a palmtop computer, a desktop computer, a headset, a speaker, a wearable device, a vehicle-mounted device, a virtual reality device, and an augmented reality device).

According to an eighth aspect, this application provides a computer-readable storage medium including computer instructions. When the computer instructions are run by a processor, the method according to any one of the first aspect or the possible implementations of the first aspect is implemented, or the method according to any one of the second aspect or the possible implementations of the second aspect is implemented.

According to a ninth aspect, this application provides a computer program product. When the computer program product is executed by a processor, the method according to any one of the first aspect or the possible embodiments of the first aspect is implemented, or the method according to any one of the second aspect or the possible embodiments of the second aspect is implemented.

For example, the computer program product may be a software installation package.

### BRIEF DESCRIPTION OF DRAWINGS

FIG. 1 is a diagram of an architecture of an ETC system according to an embodiment of this application;
FIG. 2A is a diagram of an architecture of a data processing system according to an embodiment of this application;
FIG. 2B a diagram of an architecture of a data processing system according to an embodiment of this application;
FIG. 2C a diagram of an architecture of a data processing system according to an embodiment of this application;
FIG. 3 is a flowchart of a data processing method according to an embodiment of this application;
FIG. 4 is a flowchart of another data processing method according to an embodiment of this application;
FIG. 5 is a waveform diagram of a square-wave wake-up signal according to an embodiment of this application;
FIG. 6 is a diagram of a scenario of an ETC system according to an embodiment of this application;
FIG. 7 is a diagram of a structure of a data processing apparatus according to an embodiment of this application; and
FIG. 8 is a diagram of a structure of a data processing device according to an embodiment of this application.

### DESCRIPTION OF EMBODIMENTS

It should be noted that prefix words such as "first" and "second" are used in this application only to distinguish between different described objects, and do not constitute any limitation on locations, a sequence, priorities, quantities, content, or the like of the described objects. For example, if the described objects are "fields", ordinal numbers before "field" in a "first field" and a "second field" do not limit locations or a sequence of the "fields", and "first" and "second" do not limit whether the "field" modified by "first" and the "field" modified by "second" are in a same message, and do not limit a sequence of the "first field" and the "second field". For another example, if the described objects are "levels", ordinal numbers before "level" in a "first level" and a "second level" do not limit priorities of the "levels". For another example, a quantity of described objects is not limited by a prefix word, and may be one or more. A "first device" is used as an example, where a quantity of "devices" may be one or more. In addition, objects modified by different prefix words may be the same or different. For example, if a described object is a "device", a "first device" and an "application device 1" may be a same device, devices of a same type, or devices of different types. For another example, if a described object is "information", "first information" and "second information" may be information with same content or information with different content. In conclusion, use of the prefix words for distinguishing between the described objects in embodiments of this application does not constitute a limitation on the described objects. For descriptions of the described objects, refer to the context descriptions in the claims or embodiments, and use of the prefix words should not constitute a redundant limitation.

It should be noted that, in embodiments of this application, a description manner like "at least one (or at least one piece) of a1, a2, ..., and an" is used, including a case in which any one of a1, a2, ..., and an exists alone, and also including a case of any combination of any plurality of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

An ETC system is used to implement automatic toll collection on a highway or bridge. A vehicle-mounted electronic label installed on a windshield of a vehicle communicates with a microwave antenna on a lane of an ETC station in a short range. A computer networking technology is used to perform background settlement with a bank. In this way, the vehicle can pay a highway or bridge fee without stopping when passing a highway or bridge toll station.

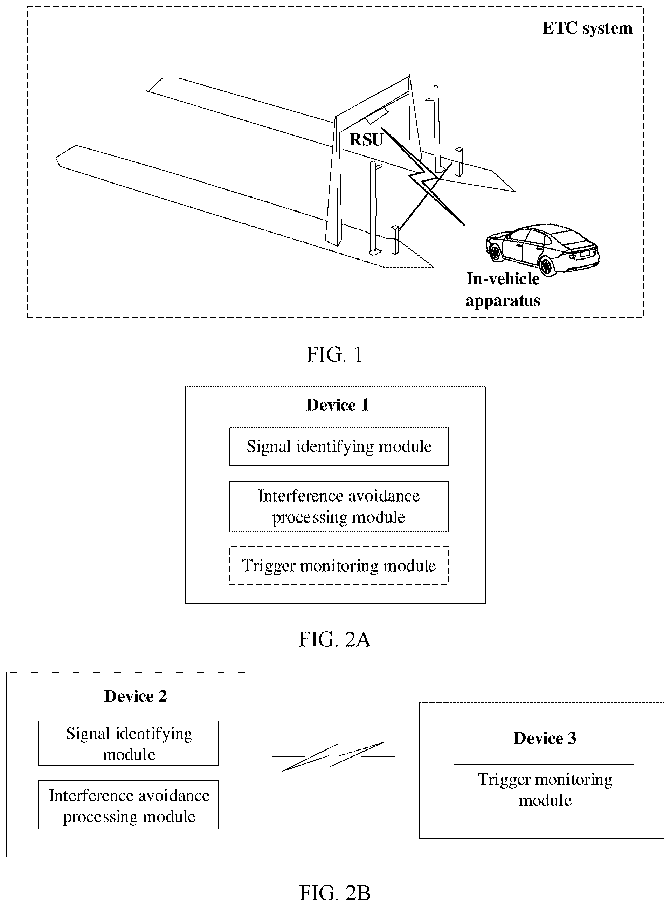

Refer to FIG. 1. FIG. 1 is a diagram of an architecture of an ETC system according to an embodiment of this application. The ETC system includes at least an in-vehicle apparatus on a vehicle and a roadside unit (roadside unit, RSU) installed on a lane of an ETC service station. The in-vehicle apparatus may be, for example, an on-board unit (on board unit, OBU). The OBU may also be referred to as a transponder or an electronic label. The OBU stores identification information of the vehicle and a vehicle user.

For example, an interaction process of enabling an ETC service is specifically as follows: When the RSU detects that the vehicle enters an area range of the ETC system, before the RSU sends an inquiry signal carrying service data, the RSU first sends a wake-up signal based on a downlink frequency of the ETC system. The wake-up signal is used to wake up the OBU of the vehicle. Then the RSU sends an inquiry signal based on the downlink frequency. After receiving the inquiry signal, the OBU of the vehicle sends a feedback signal based on an uplink frequency of the ETC system. The feedback signal is a response to the inquiry signal. In this way, if the RSU successfully receives the feedback signal from the OBU, it indicates that the vehicle has successfully paid an expense at the station in which the ETC system is located. Then a horizontal bar between two columns in FIG. 1 is opened, and the vehicle can pass.

In the ETC system, wireless communication is used for communication between the RSU and the OBU. In wireless communication, a radio channel or a frequency band is shared. Therefore, the foregoing ETC system may be affected by another wireless system in a process of use. As a result, an ETC service transaction fails, and travel efficiency of the vehicle is affected.

For the foregoing problem, an embodiment of this application provides a data processing method, so that an ETC signal can be identified in a timely manner and active interference avoidance can be performed, so that the ETC system is not interfered. Herein, the method provided in this embodiment of this application not only can prevent the ETC system from being interfered, but also is applicable to another wireless communication system that is expected not to be interfered.

The following describes technical solutions of this application with reference to the accompanying drawings.

A data processing system provided in an embodiment of this application may be configured to prevent an application system, for example, an ETC system, from being interfered.

Before the data processing system is described, first, the following describes three functional modules needed to achieve the foregoing objectives. Herein, the three functional modules include: a signal identifying module, an interference avoidance processing module, and a trigger monitoring module. The signal identifying module is configured to identify a characteristic signal of an application system. The interference avoidance processing module is configured to perform interference avoidance processing on the application system. The trigger monitoring module is configured to monitor a trigger condition under which the signal identifying module works.

An applied data processing system varies based on different deployment locations of the three functional modules. In an embodiment of this application, the data processing system is, for example, any one of the following forms.

First form:
the signal identifying module and the interference avoidance processing module are deployed on a same device.

Refer to FIG. 2A. FIG. 2A is a diagram of a data processing system according to an embodiment of this application. In FIG. 2A, the data processing system includes only a device 1, where the device 1 integrates a signal identifying module and an interference avoidance processing module. In other words, after identifying a characteristic signal of an application system, the device 1 may perform interference avoidance processing.

In this case, because the device 1 does not integrate a trigger monitoring module, if no trigger mechanism is disposed for the signal identifying module, the signal processing module in the device 1 needs to be persistently in a working state.

Further, to reduce resource consumption of the device 1, for example, power consumption, the device 1 may further integrate a trigger monitoring module. In this way, when the trigger monitoring module detects a trigger condition, the signal identifying module in the device 1 may start to work.

Second form:
the signal identifying module and the interference avoidance processing module are deployed on a same device, and the trigger monitoring module is deployed on another device.

Refer to FIG. 2B. FIG. 2B is a diagram of a data processing system according to an embodiment of this application. In FIG. 2B, the data processing system includes a device 2 and a device 3. The device 2 and the device 3 communicate in a wired or wireless manner. A signal identifying module and an interference avoidance processing module are integrated in the device 2, and a trigger monitoring module is integrated in the device 3.

In FIG. 2B, when the trigger monitoring module in the device 3 detects a trigger condition, the device 3 notifies the device 2 by using auxiliary information, so that the device 2 starts to detect a characteristic signal of an application system.

Third form:
the interference avoidance processing module is separately deployed on a device, and the signal identifying module and the interference avoidance processing module are deployed on a same device.

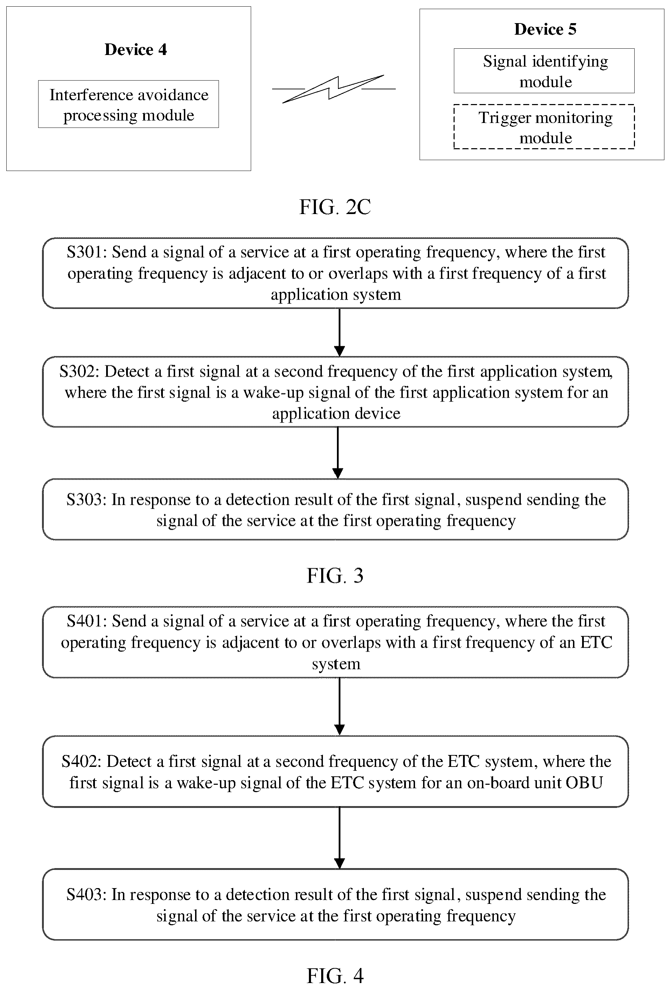

Refer to FIG. 2C. FIG. 2C is a diagram of a data processing system according to an embodiment of this application. In FIG. 2C, the data processing system includes a device 4 and a device 5. The device 4 and the device 5 communicate in a wired or wireless manner. An interference avoidance processing module is integrated in the device 4, and a trigger monitoring module and a signal identifying module are integrated in the device 5.

In FIG. 2C, the device 5 undertakes a task of identifying a characteristic signal, or shoulders a task of monitoring a trigger condition and identifying a characteristic signal. In a case in which the characteristic signal is detected, the device 5 notifies the device 4 by using indication information, so that the device 4 performs active interference avoidance processing. In the system architecture shown in FIG. 2C, an independent device is specially responsible for monitoring a trigger condition and identifying a characteristic signal. Interference avoidance can be implemented for a first application service, without a need for integrating a trigger monitoring module and a signal identifying module in each wireless communication device. In this way, a deployment cost is reduced.

In other words, the data processing method provided in embodiments of this application may be performed by an apparatus shown in FIG. 2A, namely, the device 1, or may be performed by the system shown in FIG. 2B or FIG. 2B. Herein, specifically for the data processing method, refer to related descriptions in the following method embodiments. Details are not described herein again.

For example, any one of the foregoing devices 1 to 5 may be any communication device such as a user terminal, a roadside device, a network-side device, or a vehicle; or may be an apparatus or component in any one of the foregoing communication devices, for example, a chip or an integrated circuit.

The user terminal may be, for example, a portable mobile device (for example, a mobile phone or a tablet), an intelligent wearable device (for example, a sports band or a watch), a virtual reality device, or an augmented reality device.

For example, the roadside device may be an apparatus such as a roadside unit (roadside unit, RSU), multi-access edge computing (multi-access edge computing, MEC) device, or a sensor. In some possible embodiments, the roadside device may be a system-level device including an RSU and an MEC, or a system-level device including an RSU and a sensor; or may be a system-level device including an RSU, an MEC, and a sensor.

The network-side device may be, for example, a server deployed on a network side. The network-side device may be deployed in a cloud environment or an edge environment.

An apparatus in the vehicle includes but is not limited to: a software and hardware integrated platform configured to support intelligent driving, namely, an in-vehicle computing platform, for example, a mobile data center (mobile data center, MDC); a software and hardware integrated platform configured to support vehicle body control and chassis control, for example, a vehicle domain controller (vehicle domain controller, VDC); a software and hardware integrated platform configured to provide an in-vehicle multimedia service (for example, at least one of a head display, a dashboard display, or audio and video entertainment), for example, one of more of a cockpit domain controller (cockpit domain controller, CDC) and a central computing unit; or another apparatus having a wireless communication capability and/or a processing capability, for example, an on-board unit OBU.

The data processing system shown in FIG. 2A, FIG. 2B, or FIG. 2C may be applied to a plurality of application scenarios, for example, mobile Internet (mobile Internet, MI), industrial control (industrial control), self-driving (self-driving), transportation safety (transportation safety), Internet of things (Internet of things, IoT), a smart city (smart city), or a smart home (smart home).

The data processing system shown in FIG. 2A, FIG. 2B, or FIG. 2C, or any one of the foregoing devices 1 to 5 may be applied to a plurality of network types, for example, used in one or more of the following network types: SparkLink (SparkLink), a long term evolution (long term evolution, LTE) network, a fifth-generation mobile communication technology (5th generation mobile communication technology, 5G), a wireless local area network (for example, Wi-Fi), Bluetooth (Bluetooth, BT), ZigBee (ZigBee), and an in-vehicle short-range wireless communication network or dedicated short-range communications (dedicated short range communications, DSRC).

It should be noted that FIG. 2A to FIG. 2C are merely example architectural diagrams, and quantities of network elements included in the systems shown in FIG. 2A to FIG. 2C are not limited. Although not shown in FIG. 2A to FIG. 2C, in addition to the functional entities shown in FIG. 2A to FIG. 2C, another functional entity may be further included in FIG. 2A to FIG. 2C. In addition, the method provided in embodiments of this application may be applied to the data processing systems shown in FIG. 2A to FIG. 2C. Certainly, the method provided in embodiments of this application may also be applied to another data processing system. This is not limited in embodiments of this application.

Refer to FIG. 3. FIG. 3 is a flowchart of a data processing method according to an embodiment of this application. The method may be applied to a first device having a characteristic signal identification function. For example, the first device may be the device 1 in FIG. 2A, or a part or a component in the device 1. The method includes but is not limited to the following steps.

S301: Send a signal of a service at a first operating frequency, where the first operating frequency is adjacent to or overlaps with a first frequency of a first application system.

For example, that the first operating frequency is adjacent to the first frequency may be understood as follows: Both the first operating frequency and the first frequency are in a same preset frequency range; or understood as that an interval between the first operating frequency and the first frequency is less than a first threshold.

In an implementation, the first frequency is an uplink frequency or a downlink frequency.

For example, the first application system includes an application service providing device and an application service using device. The application service providing device sends a signal to the application service using device based on a downlink frequency. The application service using device sends a feedback signal to the application service providing device based on an uplink frequency.

For example, the first device may belong to the first application system, or may be independent of the first application system.

S302: Detect a first signal at a second frequency of the first application system, where the first signal is a wake-up signal of the first application system for an application device.

Herein, that the first signal is detected at the second frequency indicates that currently the first application system uses the second frequency.

In this embodiment of this application, the second frequency is different from the first frequency.

In an implementation, the second frequency is an uplink frequency or a downlink frequency.

For example, the following four combination manners of the first frequency and the second frequency are included:
(1) the first frequency is an uplink frequency, and the second frequency is an uplink frequency;
(2) the first frequency is an uplink frequency, and the second frequency is a downlink frequency;
(3) the first frequency is a downlink frequency, and the second frequency is a downlink frequency; and
(4) The first frequency is a downlink frequency, and the second frequency is an uplink frequency.

In other words, it can be learned from the foregoing manner (1) that the first frequency and the second frequency may be different uplink frequencies, or may be a same uplink frequency. It can be learned from the foregoing manner (3) that the first frequency and the second frequency may be different downlink frequencies, or may be a same downlink frequency. It can be learned from the foregoing manner (2) or manner (4) that the first frequency and the second frequency are different.

For example, both the first frequency and the second frequency are operating frequencies preconfigured for the first application system to use.

Herein, the application device is equivalent to the application service using device in S301.

For example, the first signal may not carry service data. The first signal may also be understood as, for example, a preparation signal, an indication signal, or a preparatory signal, to play a role of waking up the application device.

In an implementation, if the first application system is an ETC system, the application device is an on-board unit OBU. In this case, the first signal is a wake-up signal of the ETC system for the on-board unit OBU. In this case, the second frequency is a downlink frequency, and the first frequency is an uplink frequency or a downlink frequency.

Further, the first signal is, for example, a 14 kHz square-wave wake-up signal.

In an implementation, detecting the first signal includes: identifying that the first signal meets a signal feature of the wake-up signal of the first application system for the application device. Herein, the signal feature of the wake-up signal may be, for example, a waveform feature of the wake-up signal.

In another implementation, detecting the first signal includes: after it is detected that a power value of the first signal in frequency domain or time domain is greater than a preset threshold, identifying that the first signal meets a signal feature of the wake-up signal of the first application system for the application device.

In some possible embodiments, a trigger condition may be further specified for detecting the first signal at the second frequency. For example, auxiliary information is received; and detection of the first signal is performed based on the auxiliary information. In this way, the first device does not need to be in a detection state in real time, and starts detection of the first signal only after receiving the auxiliary information, so that consumption of a resource, for example, consumption of electric energy or consumption of bandwidth, on a first device side can be reduced.

For example, the auxiliary information may be received from a second device. In this case, the method provided in this embodiment of this application is also applicable to the data processing system shown in FIG. 2B. The first device is equivalent to the device 2 in FIG. 2B, and the second device is equivalent to the device 3 in FIG. 2B.

The second device includes but is not limited to at least one of a user terminal, a network-side device, a roadside device, a vehicle, or the like. The network-side device may be, for example, a cloud server. The roadside device may be an apparatus such as a roadside unit (roadside unit, RSU), a roadside image collection apparatus, multi-access edge computing (multi-access edge computing, MEC) device, or a sensor. In some possible embodiments, the roadside device may alternatively be a system-level device including an RSU and an MEC, or a system-level device including an RSU and a sensor; or may be a system-level device including an RSU, an MEC, and a sensor. The user terminal may be, for example, a portable mobile device (for example, a mobile phone or a tablet), an intelligent wearable device (for example, a sports band or a watch), a virtual reality device, or an augmented reality device.

For example, the auxiliary information is navigation indication information. The navigation indication information indicates that a current location is within an area range of a service station of the first application system, or indicates that a navigation path passes through a service station of the first application system, or indicates a distance to a current nearest service station of the first application system.

For example, the auxiliary information is auxiliary detection information. The auxiliary detection information indicates that a service station of the first application system has been identified or detected, or indicates an area range of a service station of the first application system is about to be entered or has been entered, or indicates that the first application system appears.

In some possible embodiments, the auxiliary information may alternatively be obtained by the first device from an application service of the first device. For example, the auxiliary information is indication information of a navigation application, and indicates that a current location is within an area range of a service station of the first application system, or indicates that the first application system appears, or indicates a distance to a current nearest service station of the first application system. For another example, the auxiliary information may be image detection information output by an image detection application. The image detection information indicates that a service station of the first application system is detected, or indicates that the first application system is present.

S303: In response to a detection result of the first signal, suspend sending the signal of the service at the first operating frequency.

In this embodiment of this application, when the first signal is detected at the second frequency, sending the signal of the service at the first operating frequency is suspended. It can be understood that, because the first operating frequency is adjacent to or overlaps with the first frequency of the first application system, detecting the first signal at the second frequency indicates that the first application system is about to use the first frequency subsequently; and sending the signal of the service at the first operating frequency is suspended in a timely manner, to ensure that the subsequent use of the first frequency by the first application system is not interfered with, thereby facilitating normal running of the first application system.

In some possible embodiments, to avoid delaying operation of the foregoing service, the first device may further perform interference avoidance through frequency switching. Specifically, the signal of the service is sent at a second operating frequency, where the second operating frequency is neither adjacent to nor overlaps with the first frequency. In this way, frequency switching from the first operating frequency to the second operating frequency that is neither adjacent to the first frequency nor overlaps with the first frequency is performed, to send the signal of the service at the second operating frequency. This does not interfere with subsequent use of the first frequency by the first application system, and does not delay sending of the signal of the service, thereby facilitating normal running of the first application system and helping improve communication efficiency.

In some possible embodiments, after sending the signal of the service at the first operating frequency is suspended, the method further includes: canceling the suspension if the first signal is not detected at the second frequency within preset duration. In other words, if the first signal is not detected at the second frequency within the preset duration, the signal of the service may continue to be sent at the first operating frequency. In this way, utilization or usage of the first operating frequency is improved.

It can be understood that both the first frequency and the second frequency are operating frequencies preconfigured for the first application system to use. In some possible embodiments, the operating frequencies preconfigured for the first application system to use include a plurality of uplink frequencies and a plurality of downlink frequencies. In this case, regardless of whether the first signal is detected at an uplink frequency of the first application system or detected at a downlink frequency of the first application system, in response to the detection result of the first signal, interference avoidance processing may be performed for all of the frequencies (for example, including the uplink frequencies and the downlink frequencies) preconfigured for the first application system to use. For example, sending the signal of the service at a frequency that is close to or overlaps with an operating frequency of the first application system is suspended.

It can be learned that, according to this embodiment of this application, when the wake-up signal of the first application system for the application device is detected at the second frequency of the first application system, sending the signal of the service at a frequency that is adjacent to or overlaps with the first frequency of the first application system is stopped. In this way, interference avoidance is implemented for the first frequency, to help ensure normal running of the first application system.

The following describes application of the data processing method in FIG. 3 by using a specific scenario. An ETC system is used as an example of the foregoing first application system. Refer to FIG. 4. FIG. 4 is a flowchart of a data processing method according to an embodiment of this application. The method may also be applied to the foregoing first device. The method includes but is not limited to the following steps.

S401: Send a signal of a service at a first operating frequency, where the first operating frequency is adjacent to or overlaps with a first frequency of an ETC system.

For example, that the first operating frequency is adjacent to the first frequency may be understood as follows: Both the first operating frequency and the first frequency are in a same preset frequency range; or understood as that an interval between the first operating frequency and the first frequency is less than a first threshold.

S402: Detect a first signal at a second frequency of the ETC system, where the first signal is a wake-up signal of the ETC system for an on-board unit OBU.

In an implementation, the second frequency is a downlink frequency, and the first frequency is an uplink frequency. In this case, the second frequency is different from the first frequency.

In another implementation, the second frequency is a downlink frequency, and the first frequency is a downlink frequency. In this case, the first frequency may be the same as or different from the second frequency.

For example, the first frequency is the same as the second frequency. In this case, it indicates that the first operating frequency is adjacent to or overlaps with a downlink frequency (for example, a downlink frequency 1) of the ETC system, and the first signal is detected at the downlink frequency 1.

For another example, the first frequency is different from the second frequency. In this case, it indicates that the ETC system has at least two downlink frequencies. For example, the first operating frequency is adjacent to or overlaps with a downlink frequency (for example, a downlink frequency 1) of the ETC system, and the first signal is detected at another downlink frequency (for example, a downlink frequency 2) of the ETC system.

For example, the first signal is used to wake up the OBU. The first signal may be periodically sent at the second frequency by an RSU in the ETC system.

For example, the first signal is a square-wave wake-up signal of the ETC system for the OBU.

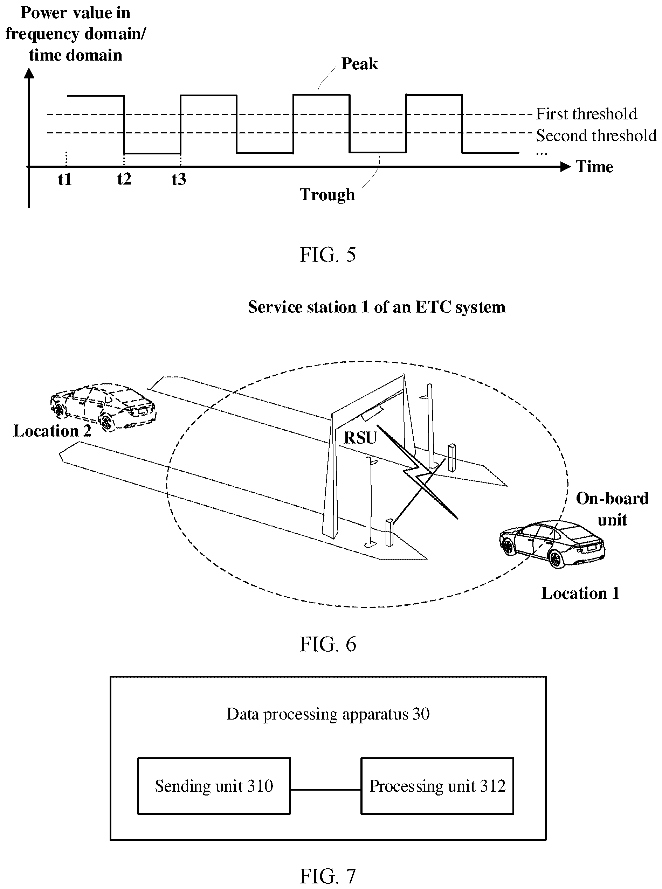

Refer to FIG. 5. FIG. 5 is a waveform diagram of a square-wave wake-up signal according to an embodiment of this application. It can be learned from FIG. 5 that a waveform feature of the square-wave wake-up signal includes: A periodic continuous square wave distribution rule is present. For example, a waveform from a moment t1 to a moment t3 shown in FIG. 5 may be referred to as a square wave. A waveform from the moment t1 to a moment t2 is referred to as a peak of the square wave, that is, a power value of the square wave in time domain or frequency domain is greater than a first threshold. A waveform from the moment t2 to the moment t3 is referred to as a trough of the square wave, that is, a power value of the square wave in time domain or frequency domain is less than a second threshold. The first threshold is greater than or equal to the second threshold. In addition, the square-wave wake-up signal needs to meet the following: A quantity of peaks of the square wave or a quantity of troughs of the square wave is greater than or equal to a preset quantity value.

In an implementation, detecting the first signal includes: identifying that the first signal meets a signal feature of the wake-up signal of the ETC system for the OBU. Herein, the signal feature of the wake-up signal may be, for example, a waveform feature of the wake-up signal.

In another implementation, detecting the first signal includes: after it is detected that a power value of the first signal in frequency domain or time domain is greater than a preset threshold, identifying that the first signal meets a signal feature of the wake-up signal of the ETC system for the OBU.

For example, the preset threshold may be the first threshold shown in FIG. 5, that is, it is detected that a power value of the first square wave of the first signal in frequency domain or time domain is greater than the first threshold. In other words, the first device is triggered to identify whether the first signal meets the signal feature of the wake-up signal of the ETC system for the OBU.

In some possible embodiments, a trigger condition may be further specified for detecting the first signal at the second frequency. For example, auxiliary information is received; and detection of the first signal is performed based on the auxiliary information. In this way, the first device does not need to be in a detection state in real time, and starts detection of the first signal only after receiving the auxiliary information, so that consumption of a resource, for example, consumption of electric energy or consumption of bandwidth, on a first device side can be reduced.

For example, the auxiliary information may be received and obtained from a second device, or may be obtained from an application service of the first device. The application service includes but is not limited to, for example, a navigation application and an image detection application. The second device includes but is not limited to at least one of a user terminal, a network-side device, a roadside device, a vehicle, or the like. For details about the foregoing devices, refer to related descriptions of S302 in the embodiment in FIG. 3. Details are not described herein again.

For example, the auxiliary information is navigation indication information. The navigation indication information indicates that a current location is within an area range of a service station of the ETC system, or indicates that a navigation path passes through a service station of the ETC system, or indicates a distance to a current nearest service station of the ETC system.

For example, the auxiliary information is auxiliary detection information. The auxiliary detection information indicates that a service station of the ETC system has been identified or detected, or indicates that an area range of a service station of the ETC system is about to be entered or has been entered, or indicates that the ETC system appears.

S403: In response to a detection result of the first signal, suspend sending the signal of the service at the first operating frequency.

It can be understood that, because the first operating frequency is adjacent to or overlaps with an uplink frequency of the ETC system, detecting the first signal at a downlink frequency of the ETC system indicates that the ETC system is about to use the uplink frequency subsequently; and sending the signal of the service at the first operating frequency is suspended in a timely manner, to ensure that the subsequent use of the uplink frequency by the ETC system is not interfered. In this way, normal running of the ETC system is ensured.

In some possible embodiments, to avoid delaying operation of the foregoing service, the first device may further perform interference avoidance through frequency switching. Specifically, the signal of the service is sent at a second operating frequency, where the second operating frequency is neither adjacent to nor overlaps with the first frequency. In this way, the signal of the service is sent at the second operating frequency that is neither adjacent to nor overlaps with an uplink frequency of the ETC system, instead of at the first operating frequency. This does not interfere with subsequent use of the uplink frequency by the ETC system, and does not delay sending of the signal of the service, thereby facilitating normal running of the ETC system and helping improve communication efficiency.

In some possible embodiments, after sending the signal of the service at the first operating frequency is suspended, the method further includes: canceling the suspension if the first signal is not detected at the second frequency within preset duration. In this way, utilization or usage of the first operating frequency is improved.

For example, refer to FIG. 6. FIG. 6 is a diagram of a scenario of an ETC system according to an embodiment of this application. In FIG. 6, a range indicated by an elliptically dashed line represents an area range in which a service station 1 of the ETC system is located. It is assumed that a first device is in a vehicle. It is assumed that, when the vehicle is in the area in the dashed line box, the first device can detect the first signal at the second frequency; and when the vehicle is not in the area in the dashed line box, the first device cannot detect the first signal. For example, the first device can detect the first signal at the second frequency at a location 1, but the first device does not detect the first signal at the second frequency at a location 2. For example, if the first signal is not detected at the second frequency within the preset duration, canceling the suspension may be specifically: starting from entrance of the vehicle into the area range in which the service station 1 of the ETC system is located, till the vehicle leaves the area range in which the service station 1 of the ETC system is located, the first device does not detect the first signal at the second frequency, and the first device may continue to send the signal of the service at the first operating frequency. In this way, utilization or usage of the first operating frequency is improved.

It can be understood that both the first frequency and the second frequency belong to operating frequencies preconfigured for the ETC system to use. In some possible embodiments, the operating frequencies preconfigured for the ETC system to use may include a plurality of uplink frequencies and a plurality of downlink frequencies. In this case, in response to the detection result of the first signal, interference avoidance processing may be performed for all of the frequencies (for example, including the uplink frequencies and the downlink frequencies) preconfigured for the ETC system to use. For example, sending the signal of the service at a frequency that is close to or overlaps with an operating frequency of the ETC system is suspended.

It can be learned that, according to this embodiment of this application, when a wake-up signal of the ETC system for the on-board unit is detected at a downlink frequency of the ETC system, sending the signal of the service at a frequency that is adjacent to or overlaps with an uplink frequency of the ETC system is stopped. In this way, interference avoidance is implemented for the uplink frequency of the ETC system, to help ensure normal running of the ETC system.

In some possible embodiments, the data processing method provided in this embodiment of this application may also be performed by the data processing system shown in FIG. 2C. Specifically, for the data processing method, refer to the following steps A11 to A14.

A11: A device 4 sends a signal of a service at a first operating frequency. The first operating frequency is adjacent to or overlaps with a first frequency of an ETC system.

A12: A device 5 detects a first signal at a second frequency of the ETC system. The first signal is a wake-up signal of the ETC system for an on-board unit OBU.

The second frequency is a downlink frequency, and the first frequency is an uplink frequency or a downlink frequency.

A13: The device 5 sends avoidance indication information. The avoidance indication information indicates that the first signal is detected at the second frequency of the ETC system.

For example, the avoidance indication information may be carried in a broadcast message.

A14: The device 4 suspends, based on the received avoidance indication information, sending the signal of the service at the first operating frequency.

In some possible embodiments, to avoid interfering with an uplink frequency of the ETC system and not delay operation of the foregoing service, the device 4 may further perform interference avoidance through frequency switching. Specifically, the signal of the service is sent at a second operating frequency, where the second operating frequency is neither adjacent to nor overlaps with the first frequency.

In some possible embodiments, after the device 4 suspends sending the signal of the service at the first operating frequency, the method further includes: canceling the suspension if the first signal is not detected at the second frequency within preset duration. In this way, utilization or usage of the first operating frequency is improved.

It can be learned that, according to the implementation of this embodiment of this application, the device 5 specially undertakes an identification task of monitoring and identifying an ETC signal at a downlink frequency of the ETC system. The device 4 does not need to monitor or identify the first signal, and only needs to perform a corresponding interference avoidance measure based on the avoidance indication information that is sent by the device 5 after the ETC signal is detected, to avoid interference to an uplink frequency of the ETC system. In this way, normal running of the ETC system is ensured, and a deployment cost is reduced.

Refer to FIG. 7. FIG. 7 is a diagram of a structure of a data processing apparatus according to an embodiment of this application. The data processing apparatus 30 includes a sending unit 310 and a processing unit 312. The data processing apparatus 30 may be implemented in a manner of hardware, software, or a combination of software and hardware.

In an implementation, the sending unit 310 is configured to send a signal of a service at a first operating frequency. The first operating frequency is adjacent to or overlaps with a first frequency of a first application system. The processing unit 312 is configured to detect a first signal at a second frequency of the first application system, where the first signal is a wake-up signal of the first application system for an application device; and in response to a detection result of the first signal, suspend sending the signal of the service at the first operating frequency.

The data processing apparatus 30 may be configured to implement the method described in the embodiment in FIG. 3. In the embodiment in FIG. 3, the sending unit 310 may be configured to perform S301, and the processing unit 312 may be configured to perform S302 and S303.

In another implementation, the sending unit 310 is configured to send a signal of a service at a first operating frequency. The first operating frequency is adjacent to or overlaps with a first frequency of an electronic toll collection ETC system. The processing unit 312 is configured to detect a first signal at a second frequency of the ETC system, where the first signal is a wake-up signal of the ETC system for an on-board unit OBU; and in response to a detection result of the first signal, suspend sending the signal of the service at the first operating frequency.

The data processing apparatus 30 may be configured to implement the method described in the embodiment in FIG. 4. In the embodiment in FIG. 4, the sending unit 310 may be configured to perform S401, and the processing unit 312 may be configured to perform S402 and S403.

It should be understood that division into the units of the foregoing data processing apparatus 30 is merely logical function division. During actual implementation, all or some of the units may be integrated into one physical entity, or may be physically separated. In addition, the units in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or to implement functions of the units in the apparatus. The processor is, for example, a general-purpose processor, such as a central processing unit (central processing unit, CPU) or a microprocessor, and the memory is a memory in the apparatus or a memory outside the apparatus. Alternatively, the units in the apparatus may be implemented in a form of a hardware circuit, and the hardware circuit may be designed to implement functions of some or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement the functions of some or all of the units. For another example, in another implementation, the hardware circuit may be implemented by a programmable logic device (programmable logic device, PLD). A field programmable gate array (field programmable gate array, FPGA) is used as an example. The field programmable gate array may include a large quantity of logic gate circuits, and a connection relationship between the logic gate circuits is configured by using a configuration file, to implement the functions of some or all of the units. All the units of the foregoing apparatus may be implemented in a form of software invoked by the processor, or all the units may be implemented in a form of a hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function through a logical relationship of a hardware circuit. The logical relationship of the hardware circuit is fixed or may be reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration file to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, these units are integrated together and implemented in a form of a system-on-a-chip (system-on-a-chip, SoC). The SoC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

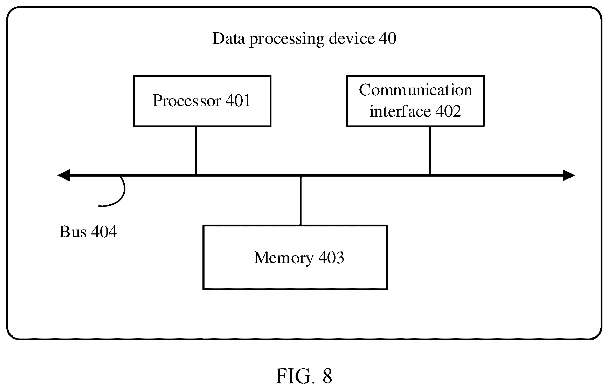

Refer to FIG. 8. FIG. 8 is a diagram of a structure of a data processing device according to an embodiment of this application. As shown in FIG. 8, the data processing device 40 includes a processor 401, a communication interface 402, a memory 403, and a bus 404. The processor 401, the memory 403, and the communication interface 402 communicate with each other via the bus 404. It should be understood that quantities of processors and memories in the data processing device 40 are not limited in this application.

In an implementation, the data processing device 40 may be any communication device such as a user terminal, a roadside device, a network-side device, or a vehicle, or may be an apparatus or a component in any one of the foregoing communication devices, for example, a chip or an integrated circuit.

The user terminal may be, for example, a portable mobile device (for example, a mobile phone or a tablet), an intelligent wearable device (for example, a sports band or a watch), a virtual reality device, or an augmented reality device.

For example, the roadside device may be an apparatus such as a roadside unit (roadside unit, RSU), multi-access edge computing (multi-access edge computing, MEC) device, or a sensor. In some possible embodiments, the roadside device may be a system-level device including an RSU and an MEC, or a system-level device including an RSU and a sensor, or may be a system-level device including an RSU, an MEC, and a sensor.

The network-side device may be, for example, a server deployed on a network side. The network-side device may be deployed in a cloud environment or an edge environment.

An apparatus in the vehicle includes but is not limited to: a software and hardware integrated platform configured to support intelligent driving, namely, an in-vehicle computing platform, for example, a mobile data center (mobile data center, MDC); a software and hardware integrated platform configured to support vehicle body control and chassis control, for example, a vehicle domain controller (vehicle domain controller, VDC); a software and hardware integrated platform configured to provide an in-vehicle multimedia service (for example, at least one of a head display, a dashboard display, or audio and video entertainment), for example, one of more of a cockpit domain controller (cockpit domain controller, CDC) and a central computing unit; or another apparatus having a wireless communication capability and/or a processing capability, for example, an on-board unit OBU.

The bus 404 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 8, but this does not mean that there is only one bus or only one type of bus. The bus 404 may include a path for information transmission between the components (for example, the memory 403, the processor 401, and the communication interface 402) of the data processing device 40.

For the processor 401, refer to related descriptions of the processor in the foregoing embodiment. Details are not described herein again.

The memory 403 is configured to provide storage space, and the storage space may store data such as an operating system and a computer program. The memory 403 may be one or a combination of a random access memory (random access memory, RAM), an erasable programmable read-only memory (erasable programmable read-only memory, EPROM), a read-only memory (read-only memory, ROM), a compact disc read-only memory (compact disc read-only memory, CD-ROM), or the like. The memory 403 may exist independently, or may be integrated into the processor 401.

The communication interface 402 may be configured to provide an information input or output for the processor 401. Alternatively, the communication interface 402 may be configured to receive data sent from the outside and/or send data to the outside, and may be a wired link interface including an Ethernet cable, or may be a wireless link (for example, Wi-Fi, Bluetooth, or universal wireless transmission) interface. Alternatively, the communication interface 402 may further include a transmitter (for example, a radio frequency transmitter or an antenna), a receiver, or the like coupled to the interface.

The processor 401 in the data processing device 40 is configured to read the computer program stored in the memory 403, and is configured to perform the foregoing method, for example, the method described in FIG. 3 or FIG. 4.

In a possible design, the data processing device 40 may be one or more modules in an entity for executing the method shown in FIG. 3. The processor 401 may be configured to read one or more computer programs stored in the memory, to perform the following operations:
sending a signal of a service at a first operating frequency by using the sending unit 310, where the first operating frequency is adjacent to or overlaps with a first frequency of a first application system; and
detecting a first signal at a second frequency of the first application system, where the first signal is a wake-up signal of the first application system for an application device; and in response to a detection result of the first signal, suspending sending the signal of the service at the first operating frequency.

In a possible design, the data processing device 40 may be one or more modules in an entity for executing the method shown in FIG. 4. The processor 401 may be configured to read one or more computer programs stored in the memory, to perform the following operations:
sending a signal of a service at a first operating frequency by using the sending unit 310, where the first operating frequency is adjacent to or overlaps with a first frequency of an electronic toll collection ETC system; and
detecting a first signal at a second frequency of the ETC system, where the first signal is a wake-up signal of the ETC system for an on-board unit OBU; and in response to a detection result of the first signal, suspending sending the signal of the service at the first operating frequency.

In the foregoing embodiments in this specification, the descriptions of embodiments have respective focuses. For a part that is not described in detail in an embodiment, refer to related descriptions in other embodiments. In addition, in embodiments of this application, unless there is no special statement or no logical conflict, terms and/or descriptions between the embodiments are consistent and can be referenced to each other; and technical features in different embodiments may be combined to form a new embodiment based on their inherent logical relationships.

It should be noted that, a person of ordinary skill in the art may understand that, all or some of the steps in methods of the foregoing embodiments may be implemented by a program instructing related hardware. The program may be stored in a computer-readable storage medium. The storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory, (electrically-erasable programmable read-only memory, EEPROM), a compact disc read-only memory (compact disc read-only memory, CD-ROM), or another optical disk memory, a magnetic disk memory, a magnetic tape memory, or any other computer-readable medium that can be configured to carry or store data.

The technical solutions of this application essentially, or the contributing part, or all or some of the technical solutions may be implemented in a form of a software product. The computer program product is stored in a storage medium and includes several instructions for enabling a device (which may be a personal computer, a server, a network device, a robot, a single-chip microcomputer, a chip, a robot, or the like) to perform all or some of the steps of the methods described in embodiments of this application.

## Claims

1. A data processing method, wherein the method comprises:
sending a signal of a service at a first operating frequency, wherein the first operating frequency is adjacent to or overlaps with a first frequency of a first application system;
detecting a first signal at a second frequency of the first application system, wherein the first signal is a wake-up signal of the first application system for an application device; and
in response to a detection result of the first signal, suspending sending the signal of the service at the first operating frequency.

2. The method according to claim 1, wherein
the first frequency is an uplink frequency, and the second frequency is a downlink frequency; or
the first frequency is an uplink frequency, and the second frequency is a downlink frequency; or
the first frequency is a downlink frequency, and the second frequency is a downlink frequency; or
the first frequency is a downlink frequency, and the second frequency is an uplink frequency.

3. The method according to claim 1 or 2, wherein after suspending sending the signal of the service at the first operating frequency, the method further comprises:
canceling the suspension if the first signal is not detected at the second frequency within preset duration.

4. The method according to any one of claims 1 to 3, wherein the method further comprises:
sending the signal of the service at a second operating frequency, wherein the second operating frequency is neither adjacent to nor overlaps with the first frequency.

5. The method according to any one of claims 1 to 4, wherein the method further comprises:
receiving auxiliary information; and
performing detection of the first signal based on the auxiliary information.

6. The method according to claim 5, wherein the auxiliary information is navigation indication information, and the navigation indication information indicates:
that a current location is within an area range of a first service station of the first application system, or
that a navigation path passes through the first service station, or
a distance between a current location and a nearest service station of the first application system.

7. The method according to claim 5, wherein the auxiliary information is auxiliary detection information, and the auxiliary detection information indicates that:
a first service station of the first application system has been identified or detected, or
an area range of the service station is about to be entered or has been entered, or
the first application system appears.

8. The method according to any one of claims 1 to 7, wherein detecting the first signal comprises:
identifying that the first signal meets a signal feature of the wake-up signal of the first application system.

9. The method according to claim 8, wherein the identification is performed after it is detected that a power value of the first signal in frequency domain or time domain is greater than a preset threshold.

10. The method according to any one of claims 1 to 9, wherein the first application system is an electronic toll collection ETC system, and the application device is an on-board unit OBU.

11. A data processing apparatus, wherein the apparatus comprises:
a sending unit, configured to send a signal of a service at a first operating frequency, wherein the first operating frequency is adjacent to or overlaps with a first frequency of a first application system; and
a processing unit, configured to detect a first signal at a second frequency of the first application system, wherein the first signal is a wake-up signal of the first application system for an application device; and
the processing unit is further configured to suspend, in response to a detection result of the first signal, sending the signal of the service at the first operating frequency.

12. The apparatus according to claim 10, wherein
the first frequency is an uplink frequency, and the second frequency is a downlink frequency; or
the first frequency is an uplink frequency, and the second frequency is a downlink frequency; or
the first frequency is a downlink frequency, and the second frequency is a downlink frequency; or
the first frequency is a downlink frequency, and the second frequency is an uplink frequency.

13. The apparatus according to claim 11 or 12, wherein the processing unit is further configured to:
cancel the suspension if the first signal is not detected at the second frequency within preset duration.

14. The apparatus according to any one of claims 11 to 13, wherein the sending unit is further configured to:
send the signal of the service at a second operating frequency, wherein the second operating frequency is neither adjacent to nor overlaps with the first frequency.

15. The apparatus according to any one of claims 11 to 14, wherein the apparatus further comprises a receiving unit,
the receiving unit is configured to receive auxiliary information, and
the processing unit is further configured to perform detection of the first signal based on the auxiliary information.

16. The apparatus according to claim 15, wherein the auxiliary information is navigation indication information, and the navigation indication information indicates:
that a current location is within an area range of a first service station of the first application system, or
that a navigation path passes through the first service station, or
a distance between a current location and a nearest service station of the first application system.

17. The apparatus according to claim 15, wherein the auxiliary information is auxiliary detection information, and the auxiliary detection information indicates that:
a first service station of the first application system has been identified or detected, or
an area range of the service station is about to be entered or has been entered, or
the first application system appears.

18. The apparatus according to any one of claims 11 to 17, wherein the processing unit is specifically configured to:
detect and identify that the first signal meets a signal feature of the wake-up signal of the first application system.

19. The apparatus according to claim 18, wherein the identification is performed after it is detected that a power value of the first signal in frequency domain or time domain is greater than a preset threshold.

20. The apparatus according to any one of claims 11 to 19, wherein the first application system is an electronic toll collection ETC system, and the application device is an on-board unit OBU.

21. A data processing apparatus, wherein the apparatus comprises a memory and a processor, the memory stores computer program instructions, and the processor runs the computer program instructions to enable the apparatus to perform the method according to any one of claims 1 to 10.

22. A vehicle, wherein the vehicle comprises the apparatus according to any one of claims 11 to 20.

23. A computer-readable storage medium, wherein the computer-readable storage medium stores program instructions, and the program instructions are used to implement the method according to any one of claims 1 to 10.
